# FASCICULE DE BREVET EUROPEEN

(11) **EP 0 669 535 B1**
(45) Date de publication et mention de la délivrance du brevet: **05.08.1998**
(21) Numéro de dépôt: 95400396.8
(22) Date de dépôt: 24.02.1995
(51) Int. Cl.: G01P 3/68

(54) **Procédé et dispositif de mesure du déplacement relatif entre deux composants**
Verfahren und Vorrichtung zur Messung der relativen Lageveränderung zwischen zwei Bauteilen
Method and apparatus for measuring the relative displacement between two devices

(30) Priorité: 28.02.1994 FR 9402261
(43) Date de publication de la demande: 30.08.1995
(73) Titulaire: MATRA TRANSPORT INTERNATIONAL, 75016 Paris (FR)
(72) Inventeur: Forin, Philippe, c/o Matra Transport, F-92542 Montrouge (FR)
(74) Mandataire: Fort, Jacques

(56) Documents cités:
- CH-A- 531 178
- DE-C- 3 819 085
- US-A- 4 162 509
- INDUSTRIAL LABORATORY, vol. 40, no. 10, 1 Octobre 1974, Moscou, URSS, pages 1453-1454; Z.N. RAKHLIN et al.: 'Opticomechanical method of measuring the rates of diffusion of streams of free-flowing materials'

## Description

La présente invention concerne la mesure du déplacement relatif entre deux composants, mobiles l'un par rapport à l'autre. L'invention est applicable dans de nombreux domaines, et en particulier dans celui des installations de transport à véhicule (constituant le premier composant) circulant sur une voie de guidage (constituant le second composant). Il sera surtout question de cette application, mais l'invention peut également s'appliquer à bien d'autres domaines et notamment aux installations industrielles dans lesquelles un produit (constituant le second composant) de forme allongée traverse un appareil (constituant le premier composant), tel qu'un laminoir ou une machine de papeterie. Dans toutes ces installations en effet, les automatismes de commande et de contrôle exigent la mesure d'un déplacement et/ou d'une vitesse.

On connaît déjà de nombreux procédés de mesure du déplacement ou de vitesse. Dans le domaine ferroviaire, le procédé le plus utilisé consiste à mesurer la vitesse de rotation des roues. Ce mode de mesure est peu précis du fait du glissement. Il exige au surplus un recalibrage périodique du fait de l'usure des roues. On a également proposé des procédés de mesure de vitesse par effet Doppler, utilisant un générateur d'onde hyperfréquence rétrodiffusée par la voie. Ce procédé est difficile à sécuriser et ne donne pas de résultat significatif aux vitesses faibles.

On a aussi proposé (US-A-4 162 509) un procédé de mesure suivant lequel on forme deux images successives, réalisées chacune par un ensemble flash-réseaux de photodiodes situés à une distance fixe l'un de l'autre, les flashes pouvant être omis, si une lumière ambiante est disponible. Un circuit ajuste l'intervalle de temps de façon que les deux images correspondent sensiblement à la même fraction du sol. On effectue ensuite une corrélation entre les deux images ainsi obtenues.

Enfin, le document CH-A-531 178 décrit un procédé mettant en oeuvre deux sources qui illuminent en permanence un rail par rapport auquel se déplace le véhicule équipé de l'appareil de mesure. Il n'y a ni formation d'image d'une région, ni formation d'image d'un réseau d'interférence. Simplement, la réflectivité de l'emplacement éclairé est mesurée par un convertisseur photoélectrique. Les signaux de sortie des deux convertisseurs sont multipliés de façon à obtenir une fonction d'intercorrélation. C'est, comme dans le document précédent, le retard entre les prises d'échantillon qui est ajusté. Pour obtenir un résultat significatif, il est essentiel que le retard soit très exactement ajusté par rapport au déplacement du véhicule par rapport au rail, ce qui représente un inconvénient.

La présente invention vise à fournir un procédé de mesure permettant d'admettre une vitesse et de donner une précision élevées. Elle propose notamment dans ce but un procédé caractérisé en ce qu'on forme les deux images par deux illuminations successives brèves, ayant sensiblement la même incidence, décalées spatialement par rapport au premier composant dans la direction du déplacement d'une distance correspondant approximativement au déplacement relatif intervenu entre les composants entre les deux illuminations.

La mise en oeuvre du procédé exige une connaissance approximative de la vitesse relative. Cette connaissance peut être obtenue par un autre procédé, moins précis et moins fiable. Si la mesure est répétitive à partir du début du mouvement, il suffit de déduire la vitesse relative du déplacement et de l'intervalle de temps entre les deux images au cours d'une mesure, de la mémoriser et de choisir le décalage, pour la mesure suivante, à la valeur correspondant au déplacement relatif qui aurait lieu en cas de maintien de la même vitesse. Il est également possible de corriger la valeur du déplacement en mesurant approximativement l'accélération du véhicule et en déduisant la variation de vitesse attendue.

Dans le cas d'un procédé de mesure de la vitesse d'un véhicule sur voie ferrée, le premier composant sera constitué par le véhicule et le second composant par un élément allongé de la voie, habituellement un rail.

L'invention vise également à fournir un dispositif permettant de mettre en oeuvre le procédé ci-dessus défini, suivant la revendication 6.

Les moyens générateurs peuvent comporter une ou plusieurs diodes laser pulsé, bien qu'un laser (notamment YAG) présente l'avantage d'être davantage monochromatique, mais au prix d'un investissement beaucoup plus élevé. Les moyens de formation d'image seront généralement une barrette CCD placée de façon que son sens d'allongement soit parallèle au sens du déplacement, ou une matrice dans la mesure où on souhaite mesurer également un déplacement transversal éventuel. Souvent il sera possible de se dispenser d'une optique de formation d'image, puisque l'on cherche à obtenir simplement la trace d'intersection d'une figure d'interférence à trois dimensions avec un plan (dans le cas d'une matrice) ou une ligne (dans le cas d'une barrette).

Le générateur peut avoir des constitutions très diverses, dont quelques-unes seulement seront données plus loin, à titre d'exemples.

Les caractéristiques ci-dessus ainsi que d'autres, avantageusement utilisables en liaison avec les précédentes mais pouvant l'être indépendamment, apparaîtront mieux à la lecture de la description qui suit de modes particuliers de réalisation, donnés à titre d'exemples non limitatifs. La description se réfère aux dessins qui l'accompagnent, dans lesquels :
- la figure 1 est un synoptique de principe d'un premier mode de réalisation ;
- la figure 2 est un schéma destiné à montrer les étapes successives de mesure ; et
- les figures 3, 4 et 5, similaires à une fraction de la figure 1, montrent des variantes de réalisation.

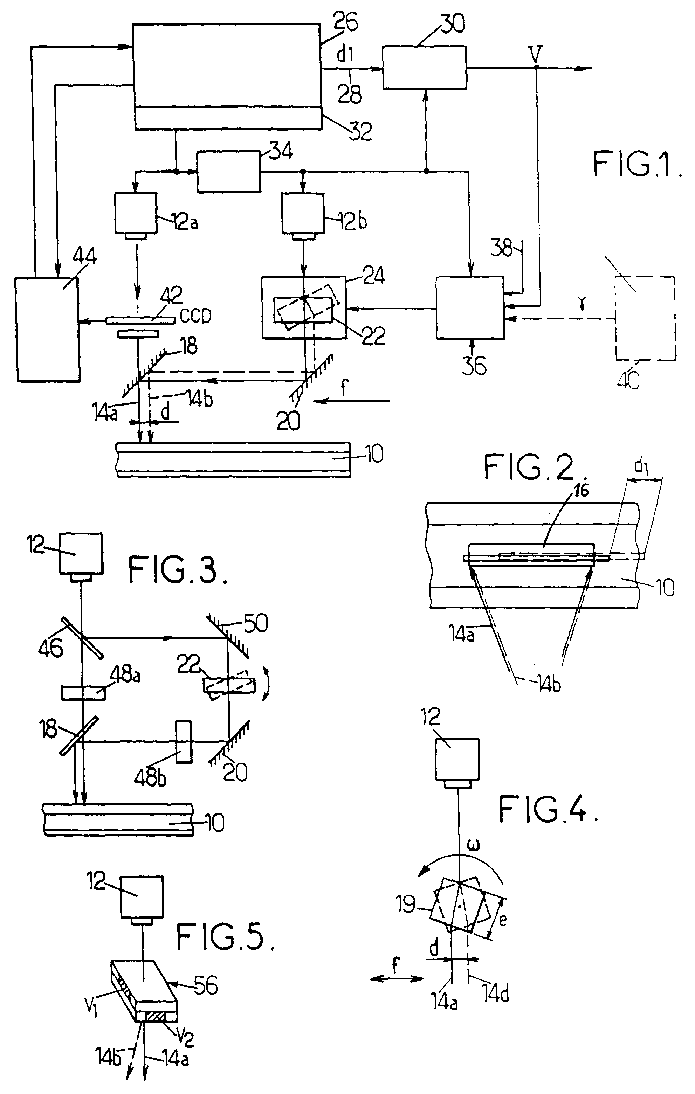

Le dispositif dont la constitution de principe est montrée en figure 1 est destiné à mesurer la vitesse et/ou le déplacement d'un mobile constitué par un véhicule de transport en commun, suivant une direction f matérialisée par un rail 10. La totalité du dispositif est portée par le véhicule et le dispositif peut s'insérer dans la chaîne de commande du véhicule, à laquelle il fournit des données de vitesse et de déplacement.

Le dispositif comporte des moyens permettant de générer deux fois la même figure d'interférence, en illuminant deux fois une même portion du rail, sous la même incidence, et chaque fois pendant un court intervalle de temps.

Dans le mode de réalisation montré en figure 1, les moyens de génération de deux éclairs comportent deux sources pulsées 12a et 12b, qui seront généralement des diodes laser.

Les deux diodes laser sont commandées de façon à fournir deux illuminations successives, séparées par un intervalle de temps t. Des moyens sont prévus pour qu'une zone commune du rail 10 soit illuminée par les deux éclairs, c'est-à-dire pour que les faisceaux 14a et 14b couvrent pratiquement la même zone du rail 10, comme indiqué par le rectangle 16 sur la figure 2. Il est souhaitable que la portion éclairée du rail soit rectangulaire et allongée dans le sens du déplacement, afin que les moyens de formation de l'image de la trace du réseau d'interférence due à la retro-diffusion sur le rail rugueux recoivent une trace bien identifiée.

Dans le cas illustré sur la figure 1, l'illumination d'une même zone est obtenue en asservissant la position de la tâche lumineuse formée sur le rail par la source 12b à la position de la tâche formée par la source 12a, qui fournit un faisceau de sortie fixe, à travers une lame semi-transparente 18.

Pour cela le faisceau de la seconde source 12b est renvoyé vers le rail par un miroir fixe 20, et la lame semi-transparente 18 et traverse des moyens déflecteurs qui permettent de translater le faisceau 14b, par rapport au faisceau 14a, d'une distance d sensiblement égale au déplacement du mobile entre les deux éclairs.

Les moyens déflecteurs montrés en figure 1 sont constitués par une lame à faces parallèles 22 qu'un moteur pas à pas 24, ou un organe moteur similaire, permet d'orienter. Lorsque la lame est dans la position montrée en traits pleins, elle fait coïncider les faisceaux 14a et 14b. Lorsqu'elle est placée obliquement, comme indiqué en tirets, elle translate le faisceau de sortie 14b d'une distance qui est fonction de la position angulaire de la lame. La valeur maximum que la lame permet de donner à d est choisie en fonction de l'intervalle de temps entre deux éclairs et de la vitesse maximale du mobile. A titre d'exemple, on peut utiliser des diodes laser fournissant des éclairs de 50 nanosecondes, ce qui est suffisamment court pour obtenir des images nettes juqu'à 350 km/h environ. L'intervalle de temps entre les deux éclairs peut être de quelques dizaines de microsecondes seulement, ce qui correspond à un écart d (figure 1) de quelques millimètres à la vitesse maximale de 350 km/h.

Le dispositif montré en figure 1 comporte un organe de calcul et de commande 26 à microprocesseur, qui commande chaque séquence de mesure et fournit, sur une sortie 28, la valeur mesurée du déplacement d1 entre deux éclairs successifs d'une même séquence. Un autre circuit de calcul 30 permet de fournir la vitesse à partir du déplacement d1 et de la connaissance de l'intervalle de temps t qui sépare les deux éclairs.

L'organe de calcul et de commande 26 fournit un top de début de séquence à une électronique 32 de commande des éclairs qui provoquent l'émission du faisceau 14a, puis, avec un retard t, fixé ou ajustable à l'aide d'un élément 34, l'émission du faisceau 14b. Le moteur pas à pas 24 des moyens déflecteurs est commandé par un organe 36 qui calcule la distance d à partir du retard t et de la vitesse et provoque l'orientation de la lame 22. En cas de mesures répétitives, la vitesse V fournie à l'organe de calcul et de commande 36 peut être celle calculée à la séquence précédente par l'organe 30. Lors de l'initialisation, ou même lors du fonctionnement courant, une valeur approximative de la vitesse peut être fournie, sur une entrée 38, par un autre organe, par exemple un capteur placé sur une roue du véhicule. L'écart d n'intervient en effet pas dans le calcul de la vitesse : il doit simplement être tel que les deux éclairs illuminent sensiblement la même zone du rail, sensiblement sous la même incidence.

L'organe 36 peut également être prévu pour recevoir un signal représentatif de l'accélération, à partir d'un élément 40, et corriger en conséquence la mesure de vitesse qu'il reçoit sur son entrée en provenance de l'organe 30.

Les moyens du dispositif destinés à former deux images successives, décalées l'une par rapport à l'autre du déplacement d1 (figure 2) sont constitués, dans le mode de réalisation illustré, par une barrette 42 de capteurs à couplage de charge, ou barrette CCD. On peut notamment utiliser une barrette comportant mille sites photosensibles répartis sur une longueur de 1cm, qui reçoit la figure d'interférence à travers un filtre coloré de sélection, adapté à la longueur d'onde d'émission des sources pulsées 12a et 12b. Le circuit 26 de calcul et de commande reçoit les images successives, transmises par l'électronique 44 de lecture de la barrette, et calcule la distance parcourue d1 par traitement d'image. Parmi les méthodes de traitement commodes, on peut en particulier adopter le calcul de la fonction d'intercorrélation, qui présente un pic dont l'abscisse représente la valeur d1 du déplacement du train entre les deux éclairs, avec un coefficient de proportionnalité dans le cas où la barrette est précédée d'une optique présentant un grandissement différent de 1.

On peut disposer une diode électroluminescente supplémentaire (ou plusieurs diodes) entre les diodes 12a et 12b et utiliser, suivant la vitesse, la diode 12b ou la diode supplémentaire. Par exemple on peut prévoir un nombre de diodes tel que les retards à créer s'étalent, pour le domaine de mesure nécessaire, entre 200 µs et 2 ms.

Dans la variante de réalisation montrée en figure 3, où les organes correspondant à ceux déjà décrits portent le même numéro de référence, une seule source pulsée 12 est utilisée pour fournir deux éclairs successifs, séparés par l'intervalle de temps t. Le premier éclair illumine le rail 10 à travers une lame semi-réfléchissante 46, un premier obturateur 48a et la lame semi-transparente 18. Le second éclair suit un trajet comportant une réflexion sur la lame semi-réfléchissante 46, une réflexion sur le miroir fixe 50, la traversée de la lame à faces parallèles orientable 22, une réflexion sur le miroir fixe 20 et la traversée d'un second obturateur 48b. Dans ce cas, l'organe de commande et de calcul 26 est prévu pour ouvrir l'obturateur 48a lors du premier éclair et le fermer lors du second, et pour ouvrir l'obturateur 48b lors du second éclair seul. La commande du moteur pas à pas de la lame à faces parallèles 22 peut être la même que dans le cas précédent.

Dans la variante de réalisation montrée en figure 4, les moyens de génération d'illumination comportent une seule source pulsée 12 de lumière cohérente. Les moyens déflecteurs sont constitués par une lame à faces parallèles 19. Cette lame 19 peut être constituée par un prisme droit, à base carrée dans le cas montré sur la figure 4. La lame 19 est entraînée en rotation continue par un moteur dont la vitesse est choisie pour obtenir le décalage spatial désiré d entre les éclairs successifs ; pour un intervalle de temps Δt entre les deux éclairs, une vitesse de rotation ω et une épaisseur e de la lame, on obtient un décalage d # eωΔt(1-1/n), où n désigne l'indice de réfraction de la lame.

On peut régler le décalage spatial d de 0 à quelques millimètres en modifiant la vitesse de rotation ω et/ou l'intervalle de temps Δt entre les éclairs.

On peut introduire un dispositif de repérage de la position angulaire de la lame qui peut être prévu pour déclencher le premier éclair dans une position déterminée de celle-ci, de façon à garantir que les deux éclairs entrent par la même face et non par deux faces adjacentes de la lame. Le dispositif devient nécessaire si on utilise un prisme à plus de quatre faces parallèles à l'axe de rotation, à huit faces par exemple, pour dévier le faisceau de sortie de la source 12.

Dans la variante de réalisation montrée en figure 5, les moyens déflecteurs sont constitués par des cellules acousto-optiques, dont une seule 56 est représentée. En faisant varier les fréquences des signaux d'alimentation V1 et V2 du matériau piézo-électrique de commande, on modifie la longueur d'onde des ondes ultra-sonores stationnaires dans le cristal qui modifie le réseau de diffraction qu'elles génèrent. Le mode de réalisation de la figure 5 présente l'avantage d'être particulièrement rapide et de permettre une poursuite même en cas de modification rapide de la vitesse ou de temps t très bref.

D'autres variantes de réalisation encore sont possibles. En particulier, les moyens de formation d'image peuvent être constitués par un capteur matriciel, remplaçant la barrette 42. Il est dans ce cas possible de déterminer la vitesse du mobile non seulement dans le sens de déplacement normal f, mais aussi transversalement, et d'asservir la position du faisceau 14b dans tous les sens en ajoutant des éléments déflecteurs.

## Revendications

1. Procédé de mesure du déplacement relatif entre deux composants mobiles l'un par rapport à l'autre, suivant lequel :
on forme, à partir d'un emplacement du premier des composants, une première image du réseau d'interférences obtenu par illumination brève avec une lumière cohérente, à partir du premier composant, d'une surface du second composant (10) ;
on forme, à partir du même emplacement, une seconde image du réseau d'interférences obtenu par illumination brève avec une lumière cohérente, ayant sensiblement la même incidence, d'une surface du second composant, à partir d'une position du premier composant décalée de la position d'où provient la première illumination d'une distance (d) ajustée pour correspondre approximativement au déplacement relatif des composants entre les deux illuminations, les surfaces illuminées étant suffisamment étendues pour qu'une partie commune de la surface du second composant participe à la formation des deux images de réseau d'interférences ; et
on détermine le déplacement réel comme étant celui qui donne la meilleure coïncidence entre les deux images.

2. Procédé selon la revendication 1, caractérisé en ce qu'on déduit la vitesse relative (v) des deux composants du déplacement (d1) et de l'intervalle de temps (t) entre les deux images, on la mémorise et on choisit le décalage (d) correspondant au déplacement relatif à la même vitesse (v).

3. Procédé selon la revendication 1, caractérisé en ce qu'on choisit le décalage (d) à partir de la vitesse relative des mobiles, mesurée par d'autres moyens.

4. Procédé selon la revendication 1, 2 ou 3, caractérisé en ce que l'on mesure l'accélération relative des deux composants et en ce qu'on corrige le décalage (d) en fonction de l'accélération.

5. Procédé selon l'une quelconque des revendications précédentes, destiné à la mesure de la vitesse d'un véhicule circulant sur voie ferrée et constituant le premier composant, caractérisé en ce que les images formées sont celles d'un rail, constituant le second composant.

6. Dispositif permettant la mise en oeuvre du procédé selon la revendication 1, caractérisé en ce qu'il comprend, sur le premier composant : des moyens de génération de lumière cohérente (12;12a;12b), des moyens (22) pour former et mémoriser deux images successives ayant la même position par rapport au premier composant, séparées par un intervalle de temps (t) suffisamment court pour que les deux images présentent un recouvrement, et des moyens (26) pour déterminer, par recherche de la meilleure coïncidence entre les deux images, le déplacement relatif entre les composants, lesdits moyens générateurs (12;12a;12b) étant commandés pour provoquer deux illuminations de durée brève du second composant, destinées chacune à former une des images et étant munies de moyens déflecteurs (22;18;20;56) commandés de façon à décaler spatialement les deux illuminations, par rapport au premier composant, dans le sens de déplacement (f), d'une longueur (d) telle que les images soient prises dans les mêmes conditions d'illumination du second composant.

7. Dispositif selon la revendication 6, caractérisé en ce que les moyens de génération de lumière cohérente sont constitués par au moins une diode laser pulsée (12) ou par un laser.

8. Dispositif selon la revendication 6 ou 7, caractérisé en ce que les moyens pour former et mémoriser deux images successives comprennent une barrette CCD (42) allongée dans le sens du déplacement.

9. Dispositif selon l'une quelconque des revendications 6 à 9, caractérisé en ce que les moyens de génération de lumière cohérente comportent une seule source dont le faisceau de sortie traverse des moyens déflecteurs (19) constitués par une lame à faces parallèles entraînée en rotation.

10. Dispositif selon la revendication 6, 7 ou 8, caractérisé en ce que les moyens de génération de lumière cohérente comprennent une seule source (12) dont le faisceau de sortie est divisé en deux trajets dont l'un est fixe et comporte un premier obturateur (48a) et l'autre passe par les moyens déflecteurs (22) et un second obturateur (48b).

## Claims

1. Method for measuring an amount of relative movement between two elements which are mutually movable, comprising :
forming, at a location of a first of the elements, a first image of the interference pattern obtained by a short illumination of a surface of the second element (10) by coherent light originating from the first element ;
forming, at the same location, a second image of the interference pattern obtained by a short illumination of a surface of a second element by coherent light having substantially the same incidence angle from a position of the first element which is offset from the position from which the first illumination originatesby a distance (d) which is adjusted to correspond approximatly to the amount of relative displacement of the elements between the two illuminations, the illuminated surfaces having a sufficient extent for a common part of the surface of the second component to intervene in forming the two images of interference pattern ; and
computing the actual amount of movement as being the amount which provides the best coincidence between the two images.

2. Method according to claim 1 characterized by deriving the relative speed (v) between the two elements from the amount of movement (d1) and the time interval (t) between the two images, storing the speed and selecting the amount of offset (d) corresponding to the amount of relative movement at the same speed (v).

3. Method according to claim 1, characterized in that the amount of offset (d) is selected from the relative speed of the movable elements, measured by other means.

4. Method according to claim 1, 2 or 3, characterized by measuring the amount of relative acceleration between the two elements and correcting the amount of offset (d) responsive to the acceleration.

5. Method according to any one of the preceding claims, for measuring the speed of a vehicule moving on a railway track and constituting the first element, characterized in that the images are those of a rail constituting the second element.

6. Device suitable for implementing the method according to claim 1, characterized in that comprises, on the first element : means for generating coherent light (12 ; 12a ; 12b), means (22) for forming and storing two successive images having the same position with respect to the first element, separating by a time interval t sufficiently short for the two images to have an overlap, and means (26) for determining-by searching the best coincidence between the two images, the amount of relative movement between the two elements, said generating means (12, 12a, 12b) being controlled for causing two illuminations of short duration of the second element, each for forming one of the images and being provided with deflecting means (22, 18, 20 , 56) controlled for spatially spacing the two illuminations with respect to the first component in the direction of displacement (f) by a length (d) such that the images are taken in the same conditions of illumination of the second element.

7. Device according to claim 6, characterized in that the means for generating coherent light comprise at least one pulsed laser diode (12) or a laser.

8. Device according to claim 6 or 7, characterized in that the means for forming and storing two successive images comprise a CCD strip (42) elongated in the direction of movement.

9. Device according to any one of claims 6-9, characterized in that the means for generating coherent light comprise a single source whose output beam traverses deflecting means (19) constituted by a transparent plate having parallel surfaces and driven in rotation.

10. Device according to claim 6, 7 or 8, characterized in that the means for generating coherent light comprise a single source (12) whose output beam is separated into two paths, one of which is stationary and comprising a first shutter (48a) and the other traverses the deflecting means (22) and a second shutter (48b).

## Patentansprüche

1. Verfahren zur Messung der relativen Lageveränderung zwischen zwei Bauteilen, die zueinander beweglich sind, **dadurch gekennzeichnet, daß:**
ausgehend von einer Stelle des ersten der Bauteile ein erstes Bild aus dem Interferenzstreifenmuster gebildet wird, das durch die kurze Belichtung mit einer kohärenten Lichtquelle vom ersten Bauteil aus von der Oberfläche des zweiten Bauteils (10) erhalten wird;
ausgehend von derselben Stelle ein zweites Bild aus dem Interferenz streifenmuster gebildet wird, das durch die kurze Belichtung mit einer kohärenten Lichtquelle, die im wesentlichen den gleichen Einfallsbereich hat, von einer Oberfläche des zweiten Bauteils ausgehend von einer Position des ersten Bauteils erhalten wird, die von der Position, aus der die erste Belichtung stammt, um einen Abstand (d) verschoben ist, der so eingestellt ist, um ungefähr mit der relativen Lageveränderung der Bauteile zwischen den beiden Belichtungen übereinzustimmen, wobei die beleuchteten Oberflächen, die ausreichend über einen gemeinsamen Teil der Oberfläche des zweiten Bauteils ausgedehnt sind, an der Bildung der zwei Bilder des Interferenzstreifenmusters teilnehmen; und die wirkliche Verschiebung als diejenige ermittelt wird, die die größte Übereinstimmung zwischen den beiden Bildern liefert.

2. Verfahren nach Anspruch 1, **dadurch gekennzeichnet, daß** die relative Geschwindigkeit (v) der beiden Bauteile aus der Verschiebung (d1) und dem Zeitintervall (t) zwischen den beiden Bildern hergeleitet wird, dieser gespeichert wird und die Verschiebung (d) entsprechend der relativen Lageveränderung bei der gleichen Geschwindigkeit (v) gewählt wird.

3. Verfahren nach Anspruch 1, **dadurch gekennzeichnet, daß** die Verschiebung (d) ausgehend von der Relativgeschwindigkeit der beweglichen Bauteile, die mit anderen Vorrichtungen gemessen wird, gewählt wird.

4. Verfahren nach Anspruch 1, 2 oder 3, **dadurch gekennzeichnet, daß** die Relativbeschleunigung der beiden Bauteile gemessen wird und die Verschiebung (d) in Abhängigkeit von der Beschleunigung berichtigt wird.

5. Verfahren nach einem der vorhergehenden Ansprüche, zur Messung der Geschwindigkeit eines Fahrzeuges, das sich auf Schienen bewegt und das erste Bauteil aufweist, **dadurch gekennzeichnet, daß** die erzeugten Bilder von einer Maschine sind, die das zweite Bauteil bildet.

6. Vorrichtung zur Durchführung des Verfahrens nach Anspruch 1, **dadurch gekennzeichnet, daß** sie im ersten Bauteil umfaßt: Vorrichtungen zur Erzeugung von kohärentem Licht (12; 12a; 12b), Vorrichtungen (22) zur Erzeugung und Speicherung von zwei aufeinanderfolgenden Bildern, die die gleiche Position im Bezug auf das erste Bauteil haben und um ein Zeitintervall (t) auseinanderliegen, das ausreichend kurz ist, damit die beiden Bilder eine Überlagerung darstellen; und Vorrichtungen (26), um durch die Suche der besten Übereinstimmung zwischen den beiden Bildern die relative Verschiebung zwischen den Bauteilen zu bestimmen, wobei die Erzeugungsvorrichtungen (12; 12a; 12b) zur Auslösung von zwei Belichtungen kurzer Dauer des zweiten Bauteils betätigt werden, jede zur Erzeugung eines der Bilder bestimmt und mit Ablenkvorrichtungen (22; 18; 20; 56) ausgestattet, die zum räumlichen Verschieben der beiden Belichtungen in Bezug auf das erste Bauteil in die Verschiebungsrichtung (f) um eine Länge (d) betrieben werden, so daß die Bilder unter den gleichen Bedingungen für die Belichtung des zweiten Bauteils aufgenommen werden.

7. Vorr. nach Anspruch 6, **dadurch gekennzeichnet**, **daß** die Vorrichtungen zur Erzeugung des kohärenten Lichtes aus mindestens einer gepulsten Laserdiode (12) oder einem Laser bestehen.

8. Vorr. nach den Ansprüchen 6 oder 7, **dadurch gekennzeichnet, daß** die Vorrichtungen zur Erzeugung und Speicherung der beiden aufeinanderfolgenden Bilder eine CCD Einrichtung (42) umfassen, die in Verschiebungsrichtung angeordnet ist.

9. Vorr. nach einem der Ansprüche 6-9, **dadurch gekennzeichnet, daß** die Vorrichtungen zur Erzeugung von kohärentem Licht eine einzige Quelle umfassen, deren Ausgangsstrahl Ablenkvorrichtungen (19) durchläuft, die aus einem Plättchen mit parallelen Seiten, das sich in Rotation befindet, bestehen.

10. Vorr. nach einem der Ansprüche 6, 7 oder 8, **dadurch gekennzeichnet, daß** die Vorrichtungen von Erzeugung von kohärentem Licht eine einzige Quelle (12) umfassen deren Ausgangsstrahl sich in zwei Verläufe trennt, von denen einer fest ist und eine erste Blende (48a) umfaßt und der andere Ablenkvorrichtungen (22) und eine zweite Blende (48b) durchläuft.
